Europäisches Patentamt

European Patent Office

Office européen des brevets

(11) Veröffentlichungsnummer: **0 487 839 A1**

# EUROPÄISCHE PATENTANMELDUNG

(21) Anmeldenummer: **91114736.1**

(22) Anmeldetag: **02.09.91**

(51) Int. Cl.⁵: **B29C  67/20,** B29C 67/22,
B29C 31/04, B29C 67/16,
B29C 35/16, B29C 33/36

(30) Priorität: **27.10.90 DE 4034213**

(43) Veröffentlichungstag der Anmeldung:
**03.06.92 Patentblatt  92/23**

(84) Benannte Vertragsstaaten:
**AT BE CH DE DK ES FR GB IT LI NL SE**

(71) Anmelder: **REAL GmbH
Gartenweg 3
W-8717 Mainbernheim(DE)**

(72) Erfinder: **Hentschel, Martin
Gartenweg 3
W-8717 Mainbernheim(DE)**

(54) Säulenförmiger Körper und Verfahren zu seiner Herstellung.

(57) Ein säulenförmiger Körper und ein Verfahren zu dessen Herstellung. Der Körper besteht aus einer thermoplastischen Kunststoffmatrix und darin eingebetteten und durch die Kunstoffmatrix verklebten Sekundärkörpern (20) aus einem nichtkriechenden Hartwerkstoff, wobei die Sekundärkörper im wesentlichen durch einander in Längs- und Umfangsrichtung überlappende Platten (20) gebildet sind und wobei sich die Platten im wesentlichen parallel zueinander und zu der Achse (11) des Körpers (1) erstecken. Die Herstellung erfolgt mit Hilfe eines Extruders.

Fig.6

20

Die Erfindung betrifft einen säulenförmigen Körper, bestehend aus einer thermoplastischen Kunststoffmatrix und darin eingebetteten und durch die Kunstoffmatrix verklebten Sekundärkörpern aus einem nichtkriechenden Hartwerkstoff.

Ein säulenförmiger Körper der vorgenannten Art ist allgemein bekannt. Die darin eingebetteten und durch die Kunststoffmatrix verklebten Sekundärkörper bestehen aus im wesentlichen kugelförmig gestalteten Mineralfarbstoffen. Sie bewirken eine Einfärbung des Körpers. Auf die mechanischen Eigenschaften des Körpers und insbesondere auf die Biegefestigkeit hat das Vorhandensein der Sekundärkörper nur einen sehr geringen Einfluß.

Der Erfindung liegt die Aufgabe zugrunde, einen säulenförmigen Körper zu zeigen, der sich von den bekannten Körpern durch deutlich verbesserte mechanische Eingenschaften unterscheidet und insbesondere durch eine wesentlich verbesserte Biegefestigkeit.

Diese Aufgabe wird erfindungsgemäß bei einem Körper der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Körper ist es vorgesehen, daß die Sekundärkörper im wesentlichen durch einander überlappende Platten gebildet werden und daß sich die Platten im wesentlichen parallel zueinander und zu der Achse des Körpers erstrecken. Die Kriechneigung des die Kunststoffmatrix bildenden, thermoplastischen Werkstoffes unter der Einwirkung von über lange Zeiträume anhaltenden Dauerbelastungen wird hierdurch deutlich reduziert, was es ermöglicht, den säulenförmigen Körper als Konstruktionselement zu verwenden.

Als besonders zweckmäßig hat es sich erwiesen, wenn die Platten in Längs- und in Querrichtung von im wesentlichen übereinstimmender Größe sind. Die Erzielung einer Dachziegelartigen Überlappung in Längs- und Umfangsrichtung des säulenförmigen Körpers wird hierduch begünstigt. Es resultiert dementsprechend sowohl in Längs- als auch in Umfangsrichtung eine deutliche Verbesserung aller mechanischen Werte, insbesondere jedoch der Biege-, der Druck- und der Einknickfestigkeit.

Die Platten sollen möglichst eine Dicke haben, die 0,2 bis 0,4mal so groß ist wie die Größe der Ausdehnung der Platten in Längs- bzw. Querrichtung.

Die Orientierung der Platten parallel zueinander und zu der Achse des Körpers während dessen Herstellung durch Extrusion eines Gemisches wird hierdurch begünstigt.

Die Platten können aus einem duroplastischen Kunststoff bestehen, der vorteilhaft durch Fasern verstärkt ist. Entsprechende Materialien finden bei der Herstellung von Kfz-Aufbauten in Form großer Flächenelemente umfangreiche Verwendung. Sie lassen sich bisher nicht in Recyclingverfahren verwenden und sind dementsprechend kostengünstig und in großen Mengen verfügbar. Die Überführung in die vorliegend benötigte Größe der Platten kann unter Verwendung von mechanischen Brechern bzw. Siebmühlen problemlos erfolgen. Dabei resultiert zugleich der Vorteil, daß der Rand der erhaltenen Platten unregelmäßig geformt und zumindest teilweise von den Enden evtl. enthaltener Fasern überragt ist. Die Einbindung der Platten in die Matrix aus thermoplastischem Kunstoff wird hierdurch verbessert. Darüberhinaus resultiert der Vorteil, daß Kunstharze und thermoplastische Kunststoffe einen im wesentlichen übereinstimmenden, linearen Wärmeausdehungskoeffizienten haben. Veränderungen der Gebrauchstemperatur des Körpers können dadurch nicht zum Auftreten innerer Spannungen führen.

Der Mengengehalt der eingelagerten Platten soll, bezogen auf das Gewicht der Kunststoffmatrix, 10 bis 40 Gewichts-% betragen, zweckmäßigerweise 20 bis 30 Gewichts-%. Insbesondere innerhalb des zuletzt angegebenen Bereichs lassen sich die Platten problemlos in einer einander überlappenden Weise parallel zueinander und zu der Achse des Körpers in denselben einbetten. Ihre mechanischen Eigenschaften vermögen als Ergebnis hiervon diejenigen der thermoplastischen Kunststoffmatrix in optimaler Weise zu ergänzen, derart, daß einerseits große mechanische Belastungen aufgenommen werden können, während andererseits eine gute Dämpfung vorliegt, was von großem Vorteil ist in Hinblick auf die Absorbtion von Schlagbelastungen. Wärmedehnungen und/oder Wärmeschrumpfungen des säulenförmigen Körpers können nicht zu einer Zerstörung der Haftung zwischen den eingelagerten Platten und der Kunststoffmatrix führen.

Eine besonders gute mechanische Widerstandsfähigkeit des Körpers und insbesondere eine deutlich verbesserte Biege- und Knickfestigkeit in Bezug auf das Gewicht läßt sich erzielen, wenn die Platten im Bereich der Peripherie des Profils des Körpers in größerer Dichte eingelagert sind als im Bereich der Kernzone. Darüberhinaus hat es sich als vorteilhaft erwiesen, wenn die Kernzone des Köpers zumindest teilweise von schaumförmiger Struktur ist.

Es ist ein Verfahren bekannt, bei dem ein thermoplastischer Kunststoff in einem Extruder erschmolzen, mit Sekundärkörpern aus einem nichtkriechenden Werkstoff durchmischt, in eine Hohlform eingespeist und in der Hohlform zu einem Körper geformt und durch Abkühlen verfestigt wird.

Die Sekundärkörper bestehen dabei aus den Partikeln eines Farbpigments. Sie bestimmen maßgeblich nur die Farbe des erhaltenen Körpers.

Der Erfindung liegt die Aufgabe zugrunde, ein solches Verfahren derart weiter zu entwickeln, daß Körper von deutlich verbesserter Festigkeit erhalten werden.

Diese Aufgabe wird erfindungsgemäß dadurch gelöst, daß die Schmelze des thermoplastischen Kunststoffs mit Sekundärkörpern durchmischt wird, die die Gestalt von Platten haben, daß die die Platten enthaltende Schmelze in Form eines um eine horizontale Achse rotierenden Pastenstranges stirnseitig in die Hohlform eingespeist und in der Hohlform der Innenwandung in Umfangsrichtung folgend zur Ablage gebracht wird und daß die Einspeisung fortgesetzt wird, bis die Innenwandung von Bestandteilen des Pastenstranges kontinuierlich durchgehend benetzt ist. Auf den Pastenstrang wirken während des Einbringens in die Hohlform verschiedene Kräfte ein. Der Pastenstrang hat stets einen geringeren Durchmesser als die Hohlform. Sein vorderes Ende sinkt hierdurch und durch die gute plastische Verformbarkeit nach der Einspeisung in der Hohlform ab und gelangt in einen Berührungskontakt mit deren Innenwandung, wobei sich eine gewisse gegenseitige Verklebung ergibt. Der Pastenstrang befindet sich neben der vorwärts gerichteten zugleich in einer rotierenden Bewegung. Die nachfolgend eingespeisten Bestandteile des Pastenstranges werden dadurch, der Umfangsrichtung folgend, kontinuierlich fortschreitend in der Hohlform zur Ablage gebracht, wobei sich eine gegenseitige Verklebung zunächst mit der Innenwandung und anschließend mit bereits abgelegten Bestandteilen des Pastenstranges ergibt, bis der zur Verfügung stehende Freiraum zwischen den abgelegten Bestandteilen und der Austrittsöffnung des Extruders ausgefüllt ist. Der weiterhin in gleicher Weise zugeführte Pastenstrang bewirkt anschließend eine soweit gehende Relativ- und Umverlagerung der bereits abgelegten Bestandteile in der Hohlform, daß es zu einem Aufbrechen der ursprünglichen Verklebung des Pastenstranges mit der Innenwandung kommt sowie zu einer Überführung der ursprünglichen Gestalt des Pastenstranges in die Form des Körpers. Dieser wird dabei fortschreitend im Bereich seiner Rückseite durch neue Teilabschnitte ergänzt, während seine Vorderseite die säulenförmige Hohlform durchwandert und schließlich in Eingriff mit dem vorderen Ende der Hohlform gelangt. Zweckmäßigerweise ist in diesem Bereich eine Meßeinrichtung vorgesehen, welche die Fertigformung des neugebildeten Körpers signalisiert. Dieser wird nachfolgend durch Abkühlung verfestigt, wobei sich schrumpfungsbedingt eine Verringerung seines Durchmessers und eine Spaltbildung in bezug auf die Innenwandung der Hohlform ergibt. Die Entnahme kann dadurch äußerst einfach und unter Anwendung eines fließfähigen Druckmittels erfolgen, beispielsweise unter Anwendung von Druckluft.

Die Platten sind in dem erhaltenen Körper überraschenderweise einander durchgehend überlappend zugeordnet, wobei sie sich im wesentlichen parallel zueinander und zu der Achse des Körpers erstrecken. Die Platten sind allseitig von der Kunststoffmatix umschlossen und hierdurch im Bereich der Oberfläche des Körpers nicht erkennbar. Die mechanischen Eigenschaften des Körpers sind in jedem Falle deutlich verbessert.

Das erfindungsgemäße Verfahren eignet sich besonders gut für die Verarbeitung von Kunststoffabfällen zu neuen Produkten. Die Kunststoffabfälle müssen hierzu in dem Maße zerkleinert und miteinander durchmischt werden, daß eine problemlose Einspeisung in den Extruder möglich ist. Neben den thermoplastischen Bestandteilen, beispielsweise solchen auf Polyolefin- oder PVC-Basis sind Platten aus einem nichtkriechenden Hartwerkstoff in dem Gemisch enthalten, beispielsweise aus einem faserverstärkten Epoxidharz. Die Kantenlänge der Platten kann bei einer Dicke von 0,5 bis 3 mm etwa 5 bis 10 mm in Längs- und Querrichtung betragen. Darüberhinaus können bei Bedarf Farbstoffe üblicher Zusammensetzung enthalten sein. Die Ausgangsmaterialien können beliebig gestaltet sein und beispielsweise Formteile und Folien in bedruckter oder unbedruckter Form umfassen.

Für die Herstellung des erfindungsgemäßen Körpers empfiehlt sich die Verwendung einer Vorrichtung, welche die Merkmale von Anspruch 13 aufweist. Auf vorteilhafte Ausgestaltungen beziehen sich die Ansprüche 14 bis 17.

Bei einer Vorrichtung nach dem Gattungsbegriff ist es somit erfindungsgemäß vorgesehen, daß der Extruder nur eine Extruderschnecke aufweist und daß die Extruderschnecke, die Austrittsöffnung und die Hohlform koaxial zueinander angeordnet sind. Die Rotationsbewegung läßt sich hierdurch am besten der Austriebsbewegung des Pastenstranges überlagern. Das Verhältnis aus dem freien Durchmesser $D1$ der Austrittsöffnung und dem freien Durchmesser $D2$ des Extruders sollte möglichst in dem Bereich zwischen 0,3 und 0,8 liegen, mit der Maßgabe, daß die Austrittsöffnung einen Durchmesser $D1$ aufweist, der wenigstens doppelt so groß ist wie die größte Ausdehnung der Platten.

Als vorteilhaft hat es sich aus dem gleichen Grunde bewährt, wenn die Austrittsöffnung von kreisförmigem Profil ist. Die erwünschte, rotierende Bewegung des Pastenstranges um seine Achse wird hierdurch begünstigt. Das Verhältnis aus der Länge und dem Durchmesser der Austrittsöffnung sollte außerdem so gering wie möglich sein und den Faktor 1 nicht überschreiten.

Der Extruder soll nach Möglichkeit nicht über eine Entgasungseinrichtung verfügen. Die mit dem Pastenstrang ausgestoßenen Luft- und/oder Gasblasen sind bei Verwendung einer solchen Ausführung überraschender Weise nicht gleichmäßig über den gesamten Querschnitt des erhaltenen Körpers verteilt sondern auf eine Kernzone des Profils beschränkt, welche außen von einem völlig porenfreien Randbereich umschlossen ist. Der Randbereich ist in allen Umfangsbereichen von einer annähernd übereinstimmenden Breite und die Kernzone und der Randbereich heben sich optisch in klarer Weise voneinander ab. Lunkerbildungen im Bereich der äußeren Oberfläche wurden nicht beobachtet. Die Außenseite des Körpers kann vielmehr willkürlich strukturiert werden, was unter geschmacklichen Gesichtspunkten von großem Vorteil ist. Der vorstehend beschriebene Aufbau des Profils bedingt außerdem, bezogen auf das Gewicht des Körpers, eine besonders große Knick- und Biegefestigkeit.

Neben der vorstehend beschriebenen Hohlform können einem Extuder zumindest zwei weitere Hohlformen zugeordnet sein, wobei die einzelnen Hohlformen quer zur Austrittsöffnung des Extruders bewegbar und wahlweise vor der Austrittsöffnung positionierbar sind. Die Produktionsgeschwindigkeit bei der Herstellung des Körpers läßt sich hierdurch wesentlich erhöhen, dergestalt, daß sich jeweils eine Hohlform in der Entleerungsposition befindet, eine Hohlform in der Befüllungsposition und eine Hohlform in der Abkühlposition.

Die einzelnen Hohlformen können bei einer solchen Ausführung der Vorrichtung in einem Revolver zusammengefaßt sein, der um eine Achse drehbar ist, die sich parallel zu der Achse des Extruders erstreckt. Der für die Relativbewegung der einzelnen Hohlformen benötigte Antrieb läßt sich hierdurch technisch vereinfachen.

Der Revolver kann zumindest bis zu seiner Achse in ein Wasserbad eintauchend angeordnet sein, wobei der Extruder und eine Auffangwanne für aus der Hohlform ausgestoßene Körper oberhalb des Wasserspiegels nebeneinanderliegend angeordnet sind. Bei einer kompakten und platzsparenden Bauweise resultieren besonders günstige Möglichkeiten, die Produktion des Körpers in vollem Umfang zu automatisieren.

Das Profil des säulenförmigen Körpers kann gemäß der vorliegenden Erfindung nahezu beliebig gestaltet werden. Neben kreisförmig begrenzten Ausführungsformen lassen sich Stern- und Polygonprofile problemlos erzeugen. Bei Rechteckprofilen können die Randzonen beliebig gestaltet und beispielsweise mit Ein- und/oder Auswölbungen versehen werden. Auf diese Weise ist es beispielsweise möglich, sogenannte Profilbretter nahezu identisch nachzubilden, die mit Nut und Feder versehen und hierdurch ineinanderfügbar und zu großen Flächengebilden vereinbar sind. Das Verhältnis aus der Tiefe und Breite entsprechender Profile kann problemlos 1:4 bis 1:6 betragen.

Die innerhalb des erfindungsgemäßen Verfahrens zur Anwendung gelangende Hohlform kann sehr einfach gestaltet sein und beispielsweise aus einem dünnwandigen Rohr aus metallischem Werkstoff bestehen. Sie wird zweckmäßig erst nach dem Erreichen der kontinuierlich durchgehenden Benetzung ihrer Innenwandung mit Bestandteilen des Pastenstranges durch ein sekundäres Kühlmittel gekühlt, um eine übereinstimmende Ausbildung der Innen- und der Außenstruktur des gebildeten Körpers auf seiner gesamten Länge zu gewährleisten. Im Anschluß hieran kann die Abkühlung des gebildeten Körpers mit intensiven Mitteln erfolgen, beispielsweise durch unmittelbares Eintauchen der gefüllten Hohlform in ein Wasserbad. Die porenfreie Randzone des gebildeten Körpers bedingt dabei eine zügige Abkühlung und Verfestigung der für die Formbeständigkeit maßgeblichen Bereiche. Die Entformung kann bereits nach kurzer Zeit erfolgen, was unter wirtschaftlichen Gesichtspunkten von großem Vorteil ist.

Der Gegenstand der Erfindung wird nachfolgend anhand der in der Anlage beigefügten Zeichnung weiter verdeutlicht. Es zeigen:

Fig.1    schematisch in längs geschnittener Darstellung eine beispielhafte Vorrichtung zur Durchführung des erfindungsgemäßen Verfahrens.

Fig.2    die Vorrichtung gemäß Fig.1 in einer Ansicht von oben.

Fig.3    das Prinzip der Einspeisung des Pastenstranges in die Hohlform.

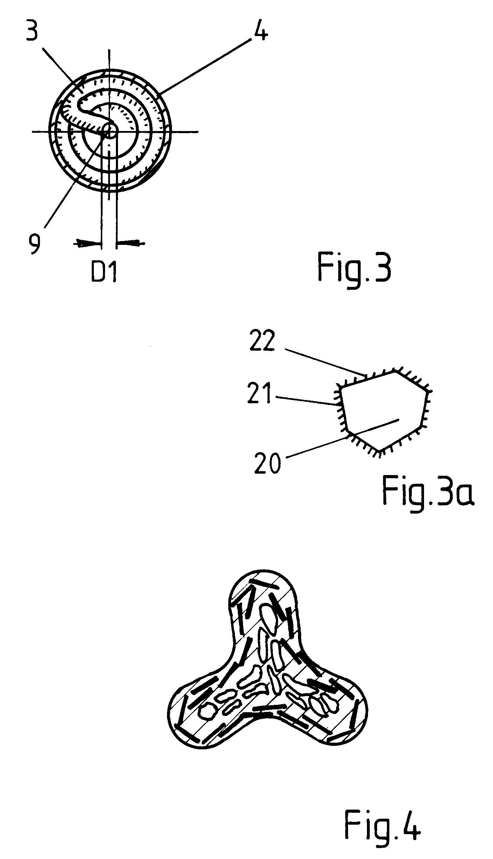

Fig. 3    a eine Platte in der Draufsicht

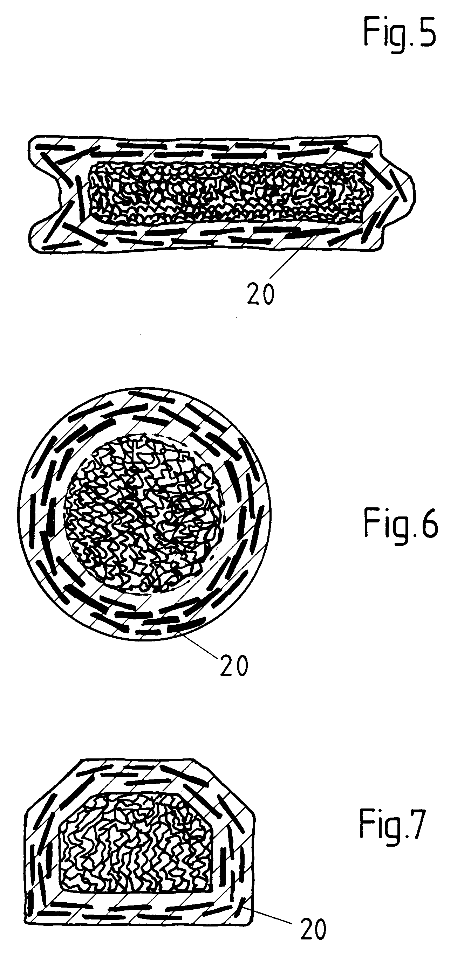

Fig.4-7    einige bespielhafte Profilformen von säulenförmigen Körpern, die nach dem erfindungsgemäßen Verfahren erhältlich sind.

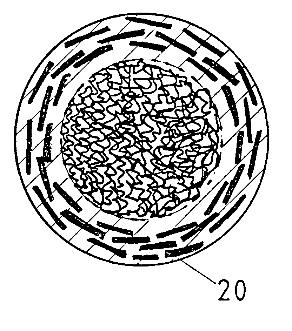

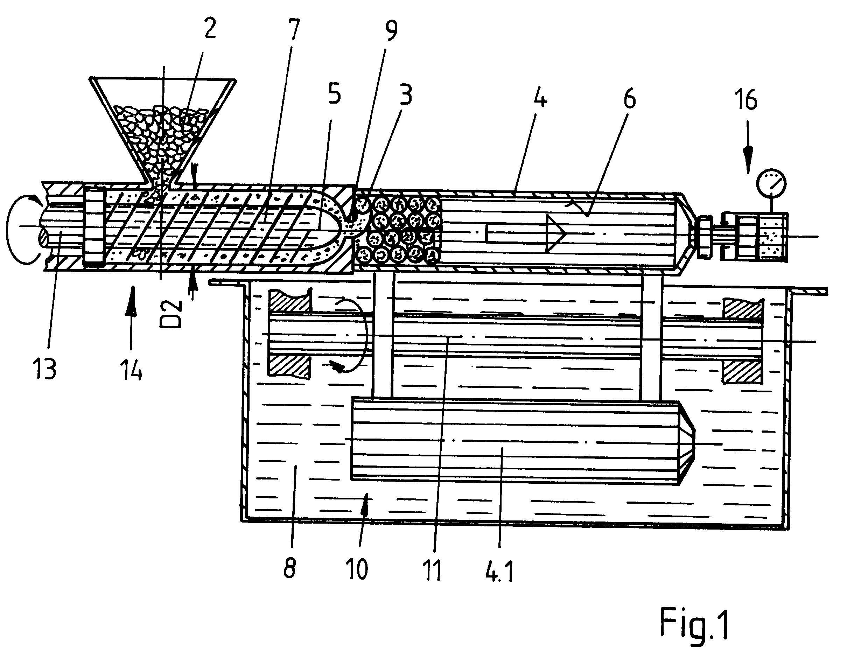

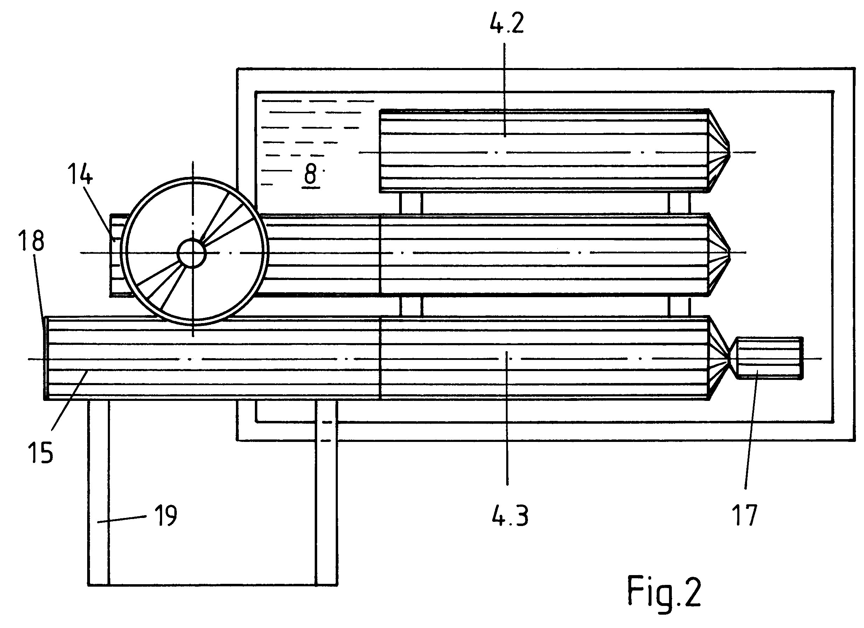

Die in den Figuren 1 und 2 gezeigte Vorrichtung besteht aus einem Extruder 14, der oberhalb eines Wasserbades 8 angeordnet ist.

Der Extruder 14 weist ein Extrudergehäuse auf, in dem eine Extruderschnecke 7 mittels einer Antriebswelle 13 relativ verdrehbar angeordnet ist. Die Extruderschnecke 7 ist auf ihrem Außenumfang mit gewindegangartig ausgebildeten Stegen versehen, durch die das mittels eines Trichters am linken Ende eingefüllte Gemisch 2 in eine fortschreitende, nach rechts gerichtete Vorwärtsbewegung versetzbar ist.

Das Extrudergehäuse weist einen Innendurchmesser $D_2$ auf, der am vorderen Ende im Bereich der Austrittsöffnung 9 verengt ist auf einen relativ verkleinerten Durchmesser $D_1$. Das am linken Ende eingegebene Gemisch 2 aus thermoplastischem Kunststoffgranulat und 20 bis 25 Gew% Sekundärkörpern in Gestalt von Platten, die bei einer Dicke von 2,5 mm eine Kantenlänge von 5 bis 10 mm in Längs- und Querrichtung haben und die aus baumwollverstärktem Epoxidharz bestehen, kann den Extruder 14 hierdurch nicht unverändert passieren sondern es wird einer starken Walkbeanspruchung ausgesetzt, was ein Erschmelzen der thermoplastischen Partikel und eine gleichmäßige Verteilung, Einbindung und Benetzung der Platten bedingt. Das Verhältnis aus den Durchmessern D 2 und D 1 beträgt etwa 4. Der aus der Austrittsöffnung 9 austretende Kunststoff hat dadurch die Form eines zähviskosen Pastenstranges, der sich in einer rotierenden Vorwärtsbewegung nach rechts befindet und in den die Platten parallel zur Austrittsrichtung eingebettet sind.

Dem Extruder 14 ist auf der rechten Seite eine Hohlform 4 vorgelagert, welche durch ein dünnwandiges, metallisches Rohr gebildet ist, das mittels einer Andrückeinrichtung 16 an die Stirnseite des Extruders 14 angedrückt wird. Die Hohlform 4 ist der Austrittsöffnung 9 und der Extruderschnecke 8 in koaxialer Weise zugeordnet. Sie ist in einem Revolver 10 gelagert, der neben der Hohlform 4 noch weitere Hohlformen 4.1 bis 4.3 umfaßt und um eine Achse 11 verdrehbar ist, die sich parallel zu der Achse des Extruders 14 erstreckt. Die einzelnen Hohlformen können dadurch quer zur Austrittsrichtung des Extruders bewegt und wahlweise vor der Austrittsöffnung 9 positioniert werden. Die in dem Revolver 10 enthaltenen Hohlformen sind stets von säulenförmiger Gestalt und von der linken Seite zentrisch zur Achse befüllbar. Sie können sich bei Gewährleistung dieser Bedingung durch eine voneinander abweichende Profilform unterscheiden.

Der Revolver 10 ist in ein Wasserbad 8 eintauchend angeordnet, wobei seine Achse 11 von dem Wasserspiegel überflutet wird. Die Temperatur des Wasserbades 8 kann der Raumtemperatur entsprechen.

Oberhalb des Wasserbades 8 ist neben dem Extruder 14 liegend, eine Auffangwanne 15 angeordnet. Diese dient der Aufnahme von fertiggestellten Körpern 1, welche in dem vorliegenden Beispiel durch die Einspeisung von Druckluft mittels eines Mundstückes 17 in das rechte Ende der gefüllten Hohlform 4.3 (dem eingetragenen Pfeil entsprechend) aus der Hohlform 4.3 ausgestoßen werden. Ein Wegbegrenzer 18 gewährleistet hierbei eine übereinstimmende Positionierung der ausgestoßenen Körper 1 in der Wanne 15. Diese kann anschließend um ihre Achse (in der Zeichenebene) nach unten geschwenkt werden, wodurch der enthaltene Körper 1 in einer Sammeleinrichtung 19 gelangt, die beispielsweise aus einer Transportpalette oder ähnlichem bestehen kann.

In Figur 3 ist die Einspeisung des Pastenstranges 3 in das Innere einer Hohlform 4 schematisch angedeutet. Der Pastenstrang 3 gelangt dabei durch die Austrittsöffnung 9 des Extruders 14 um seine Achse rotierend und in einer Vorwärtsbewegung befindlich zentral am stirnseitigen Ende in die Hohlform 4, welche von einer starren Innenwandung umschlossen und in bezug auf die Austrittsöffnung 9 in starrer Weise festgelegt ist. Der Pastenstrang 3 befindet sich in einem leicht verformbaren Zustand und legt sich, bedingt durch die Schwerkraft, zunächst unterhalb der Austrittsöffnung 9 an die Innenwandung der Hohlform 4 an, wo sich durch die adhäsiven Eigenschaften des Pastenstranges 3 eine gewisse gegenseitige Verklebung mit der Hohlform 4 ergibt. Bedingt durch die Nachführung von weiteren, um ihre Achse rotierenden Bestandteilen des Pastenstranges 3 erfolgt die weitere Ablagerung in Umfangsrichtung der Hohlform 4, wobei sich eine gegenseitige Verklebung mit der Innenwandung 6 ergibt beziehungsweise mit zuvor abgelegten Bestandteilen des Pastenstranges 3. Der zunächst verfügbare Freiraum zwischen abgelegten Bestandteilen des Pastenstranges 3 und der Austrittsöffnung 9 wird hierdurch völlig ausgefüllt, so daß sich anschließend eine Umverlagerung von bereits abgelegten Bestandteilen in noch verfügbare Freiräume ergibt unter Bildung eines ersten Teilabschnittes des säulenförmigen Körpers. Die darin eingebetteten Platten erstrecken sich anschließend überraschend sämtlich parallel zueinander und zu der Achse des Köpers 1.

Die zunächst vorhandene Verklebung des ersten Teilabschnittes mit der Innenwandung 6 der Hohlform 4 wird nachfolgend durch die Bildung weiterer Bestandteile des Körpers 1 zerstört, wobei das rechte Ende des Körpers zunehmend in Richtung des in die Hohlform 4 eingezeichneten, offenen Pfeils nach rechts verlagert wird. Der Vorgang wird solange fortgesetzt, bis die Form 4 vollständig gefüllt und die Innenwandung 6 kontinuierlich durchgehend von Bestandteilen des Pastenstranges 3 benetzt ist. Das Erreichen des diesbezüglichen Zustandes wird durch eine Meßeinrichtung 16 erfaßt. Diese ist signalleitend mit einem Schrittschaltwerk verbunden, welche beim Eintreten des angegebenen Zustandes eine Unterbrechung der Förderung des Extruders auslöst sowie eine Schwenkung des Revolvers 10 um seine Achse. Die befüllte, in heißem Zustand befindliche Hohlform 4 wird dabei in das Wasserbad 8 getaucht, eine zuvor in dem Wasserbad abgekühlte, befüllte Hohlform 4.1 in eine Entladeposition vor der Auffangwanne 15 gebracht und eine zuvor in der Entladeposition befindliche, weitere Hohlform in die Befüllposition überführt. Der Extruder 14 kann anschließend erneut in Betrieb gesetzt und durch Einspeisung von Druckluft über das Mundstück 17 eine Entleerung der in der Entladeposition befindlichen Hohlform 4.3 bewirkt werden um den nächsten Arbeitszyklus einzuleiten.

Die Figuren 4-7 zeigen beispielhafte Formen des Außenprofils und der Innenstruktur von säulenförmigen Körpern, die sich mit dem erfindungsgemäßen Verfahren und der gezeigten Vorrichtung erhalten lassen. Allen Körpern ist gemeinsam, daß sie neben einer nahezu porenfreien Randzone von im wesentlichen übereinstimmender Breite eine in nahezu schaumförmigem Zustand befindliche Kernzone aufweisen. Überwiegend in der Randzone sind die Platten aus dem Hartwerkstoff enthalten, die sich parallel zueinander und zur Achse der Körper erstrecken. Sie haben eine relativ große Oberfläche und erfahren hierdurch selbst bei einer wenig günstigen Werkstoffpaarung eine gute Verklebung mit der umgebenden Kunstoffmatrix. Die Körper erfahren dadurch eine skelettartige Verstärkung durch die Platten, was letzlich deren ausgezeichnete mechanische Widerstandsfähigkeit bedingt sowie eine gute chemische Beständigkeit. Die Oberfläche der Körper wird durchgehend durch Bestandteile der Kunstoffmatrix gebildet. Sie kann in beliebiger Weise strukturiert werden, was in ästhetischer Hinsicht von großem Vorteil ist. Holz- und lederartig erscheinende Narbungen lassen sich problemlos erzeugen, desgleichen Körper von rechteckigem, kreisförmigem oder sternförmigem Profil.

**Patentansprüche**

1. Säulenförmiger Körper, bestehend aus einer thermoplastischen Kunststoffmatrix und darin eingebetteten und durch die Kunststoffmatrix verklebten Sekundärkörpern aus einem nichtkriechenden Hartwerkstoff, dadurch gekennzeichnet, daß die Sekundärkörper im wesentlichen durch einander überlappende Platten (20) gebildet sind und daß sich die Platten im wesentchen parallel zueinander und zu der Achse (11) des Körpers (1) erstrecken.

2. Körper nach Anspruch 1, dadurch gekennzeichnet, daß die Platten (20) in Längs- und Querrichtung von im wesentlichen übereinstimmender Größe sind.

3. Körper nach Anspruch 1, dadurch gekennzeichnet, daß die Platten (20) eine Dicke haben, die 0,2 bis 0,4 mal so groß ist wie die Größe ihrer Ausdehnung in Längs- und Querrichtung.

4. Körper nach Anspruch 1, dadurch gekennzeichnet, daß die Platten (20) aus einem duroplastischen Kunststoff bestehen.

5. Körper nach Anspruch 1, dadurch gekennzeichnet, daß der Kunststoff durch Fasern (22) verstärkt ist.

6. Körper nach Anspruch 1, dadurch gekennzeichnet, daß die Fasern (22) den Rand (21) der Platten (20) zumindest teilweise überragen.

7. Körper nach Anspruch 1, dadurch gekennzeichnet, daß die Platten (20) in den Bereich der Peripherie seines Profils in größerer Dichte eingelagert sind als in den Bereich der Kernzone.

8. Körper nach Anspruch 1, dadurch gekennzeichnet, daß die Kernzone zumindest teilweise von schaumförmiger Struktur ist.

9. Verfahren zur Herstellung eines Körpers nach Anspruch 1 - 8, bei dem ein thermoplastischer Kunststoff in einem Extruder erschmolzen mit Sekundärkörpern aus einem nichtkriechenden Werkstoff durchmischt, in eine Hohlform eingespeist und in der Hohlform zu einem Körper geformt und durch Abkühlung verfestigt wird, dadurch gekennzeichnet, daß die Schmelze mit Sekundärkörpern durchmischt wird, die die Form von Platten (20) haben, daß die die Platten (20) enthaltende Schmelze in Form eines um eine horizontale Achse rotierenden Pastenstranges (3) stirnseitig in die Hohlform (4) eingespeist und in der Hohlform (4) der Innenwandung (6) in Umfangsrichtung folgend zur Ablage gebracht wird und daß die Einspeisung fortgesetzt wird, bis die Innenwandung (6) von Bestandteilen des Pastenstranges (3) kontinuierlich durchgehend benetzt ist.

10. Verfahren nach Anspruch 9, dadurch gekennzeichnet, daß der Pastenstrang (3) durch die Extruderschnecke (7) eines Einschneckenextruders (14) in die rotierende Bewegung versetzt wird.

11. Verfahren nach Anspruch 9 - 10, dadurch gekennzeichnet, daß die Hohlform (4) nach Erreichen der kontinuierlich durchgehenden Benetzung ihrer Innenwandung (6) durch ein sekudäres Kühlmittel gekühlt wird.

12. Verfahren nach Anspruch 11, dadurch gekennzeichnet, daß die Hohlform (4) durch Eintauchen in ein Wasserbad (8) gekühlt wird.

13. Vorrichtung zur Herstellung eines Körpers nach Anspruch 1 bis 8, bei der ein Extruder mit einer Extruderschnecke und einer kreisförmig begrenzten Austrittsöffnung für das Erschmelzen des Gemisches vorgesehen ist sowie eine Einrichtung zur Formgebung des Körpers, wobei die Extruderschnecke, die Austrittsöffnung und die Einrichtung koaxial zueinander angeordnet sind, dadurch gekennzeichnet, daß der Extruder (14) nur eine Extruderschnecke (7) aufweist und daß die Einrichtung aus einer Hohlform (4) besteht, die von starren Innenwänden (6) umschlossen ist.

14. Vorrichtung nach Anspruch 13, dadurch gekennzeichnet, daß die Austrittsöffnung (9) einen freien Durchmesser D1 aufweist der 0,3 bis 0,8 mal so groß ist, wie der freie Durchmesser D2 des Extruders (14).

15. Vorrichtung nach Anspruch 13 bis 14, dadurch gekennzeichnet, daß neben der Hohlform (4) zumindest zwei weitere Hohlformen (4.1 bis 4.3) vorgesehen sind und daß die Hohlformen (4 bis 4.3) quer zur Austrittsrichtung des Extruders (14) bewegbar und wahlweise vor der Austrittsöffnung (9) positionierbar sind.

16. Vorrichtung nach Anspruch 15, dadurch gekennzeichnet, daß alle Hohlformen (4 bis 4.3) in einem Revolver (10) zusammengefaßt und um eine gemeinsame Achse (11) drehbar sind, die sich parallel zu der Achse des Extruders (14) erstreckt.

17. Vorrichtung nach Anspruch 16, dadurch gekennzeichnet, daß der Revolver (10) zumindest bis zu seiner Achse (11) in ein Wasserbad (8) eintauchend angeordnet ist und daß der Extruder (14) und eine Auffangwanne (15) für aus den Hohlformen (4) ausgestoßene Körper (1) oberhalb des Wasserbades (8) nebeneinander liegend angeordnet sind.

20

Fig.1

EP 0 487 839 A1

Fig.2

Fig.3

Fig.3a

Fig.4

Fig.5

20

Fig.6

20

Fig.7

20

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| E | DE-C-4 030 274 (REAL GMBH)<br>--- | 9-17 | B29C67/20<br>B29C67/22 |
| X | DE-A-3 338 015 (ALBANY INTERNATIONAL CORP.)<br>* Seite 5, Absatz 2; Abbildung 2 *<br>--- | 1-3,7 | B29C31/04<br>B29C67/16<br>B29C35/16 |
| A | WO-A-9 006 218 (SCHAUMSTOFFWERK GREINER GMBH)<br>* Abbildung 1 *<br>--- | 1-4 | B29C33/36 |
| A | EP-A-0 051 277 (THE COCA-COLA COMPANY)<br>* Anspruch 1; Abbildungen *<br>--- | 9 | |
| A | DE-C-529 469 (INTERNATIONALE GALALITH-GESELLSCHAFT HOFF & CO.)<br>* Abbildung 1 *<br>--- | 9 | |
| X<br>A | FR-A-2 428 518 (LANKHORST TOUWFABRIKEN B.V.)<br><br>* Anspruch 1; Abbildungen *<br>--- | 13,15-17<br>1,10-17 | |
| D,A | DE-C-3 341 438 (FA. CARL FREUDENBERG)<br><br>----- | 9 | |

**RECHERCHIERTE SACHGEBIETE (Int. Cl.5)**

B29C
B29B
B29D

Der vorliegende Recherchenbericht wurde für alle Patentansprüche erstellt

| Recherchenort | Abschlußdatum der Recherche | Prüfer |
|---|---|---|
| DEN HAAG | 24 FEBRUAR 1992 | PIPPING L.E.L. |